Europäisches Patentamt

European Patent Office

Office européen des brevets

(19)

(11)  EP 1 148 718 A2

(12)  **EUROPÄISCHE PATENTANMELDUNG**

(43) Veröffentlichungstag:
     **24.10.2001  Patentblatt 2001/43**

(51) Int Cl.⁷: **H04N 5/235**, H04N 5/225

(21) Anmeldenummer: **01106220.5**

(22) Anmeldetag: **14.03.2001**

(84) Benannte Vertragsstaaten:
     **AT BE CH CY DE DK ES FI FR GB GR IE IT LI LU
     MC NL PT SE TR**
     Benannte Erstreckungsstaaten:
     **AL LT LV MK RO SI**

(30) Priorität: **07.04.2000  DE 10017185**

(71) Anmelder: **Gräser, Axel, Prof. Dr.
     56567 Neuwied (DE)**

(72) Erfinder: **Gräser, Axel, Prof. Dr.
     56567 Neuwied (DE)**

(74) Vertreter: **Möller, Friedrich, Dipl.-Ing. et al
     Meissner, Bolte & Partner
     Anwaltssozietät GbR
     Hollerallee 73
     28209 Bremen (DE)**

(54)  **Vorrichtung und Verfahren zur Aufnahme und Anzeige von Bildern**

(57)     Die Erfindung betrifft eine Vorrichtung zur Bildaufnahme und -anzeige mit wenigstens einer Kamera
zur Aufnahme eines Bildes und Anzeigemitteln zum Anzeigen des Bildes, wobei Kamera und Anzeigemittel an
einer am Kopf bzw. 0berkörper anbringbaren Halterung
angeordnet sind, wobei die Kamera eine nicht-lineare
Abhängigkeit eines von ihr erzeugbaren elektrischen
Ausgangssignals von einer von der Kamera empfangbaren Beleuchtungsstärke aufweist. Ferner betrifft die
Erfindung ein Verfahren zur Bildverarbeitung, wobei ein
aufgenommenes Bild in Bereiche aufgeteilt und innerhalb der einzelnen Bereiche der jeweilige Helligkeitskontrast individuell an die Helligkeitsdynamik des Anzeigemittels angepasst wird.

Fig. 1

EP 1 148 718 A2

## Beschreibung

Die Erfindung betrifft eine Vorrichtung zur Bildaufnahme und -anzeige mit wenigstens einer Kamera zur Aufnahme eines Bildes und Anzeigemitteln zum Anzeigen des Bildes, wobei Kamera und Anzeigemittel an einer am Kopf und/oder Oberkörper einer Person anbringbaren Halterung angeordnet sind. Die Erfindung betrifft ferner ein Verfahren zum Aufnehmen und Anzeigen von Bildern auf Anzeigemitteln, insbesondere mit einer derartigen Vorrichtung, wobei ein aufgenommenes Bild vor dem Anzeigen elektronisch bearbeitet wird.

In einigen Bereichen der Technik und des täglichen Lebens müssen Szenen mit einer hohen Leuchtdichtevariation beobachtet werden. Beispielsweise wird beim Schweißen im Bereich des Lichtbogens eine extreme Helligkeit erzeugt. Zur Vermeidung von Augenschäden ist es bekannt, Schweißschutzbrillen zu verwenden, die jedoch die Szene insgesamt drastisch abdunkelt. Der Schweißer kann dann zwar in den Lichtbogen sehen, er kann jedoch die Umgebung praktisch nicht erkennen, da sie regelmäßig zu stark abgedunkelt wird.

EP 0 941 725 A1 zeigt eine Schweißschutzmaske mit einem Infrarotbeobachtungssystem, das ein Bild des Schweißbereichs im Infrarotbereich erzeugt. Die Maske weist hierzu eine CCD-Kamera und einen innerhalb der Maske angebrachten Flüssigkristallbildschirm auf.

Der vorliegenden Erfindung liegt das Problem zugrunde, die Beobachtung von Szenen mit hoher Leuchtdichtevariation weiter zu verbessern.

Die Erfindung löst dieses Problem bei einer Vorrichtung der eingangs genannten Art dadurch, dass die Kamera eine nicht-lineare Abhängigkeit eines von ihr erzeugbaren elektrischen Ausgangssignals von einer von der Kamera empfangbaren Beleuchtungsstärke aufweist. Ferner wird das Problem bei einem Verfahren der eingangs genannten Art dadurch gelöst, dass das aufgenommene Bild in Bereiche aufgeteilt und innerhalb der einzelnen Bereiche der jeweilige Helligkeitskontrast individuell an die Helligkeitsdynamik der Anzeigemittel angepasst, insbesondere erhöht wird, insbesondere derart, dass der jeweilige Kontrast der Helligkeitsdynamik der Anzeigemittel entspricht.

Durch den Einsatz einer Kamera mit einer nicht-linearen Kennlinie, welche die Abhängigkeit des Ausgangssignals der Kamera zu empfangenen Beleuchtungsstärke wiedergibt, kann man eine Szene mit extremer Helligkeitsdynamik von beispielsweise $10^5$-$10^7$:1, insbesondere $10^6$:1, auf eine Helligkeitsdynamik von ca. $10^2$-$10^3$:1, insbesondere 200-400:1, transformieren bzw. reduzieren. Die letztgenannte Dynamik von 200-400:1 entspricht der Dynamik von bekannten LCD-Bildschirmen bzw. Bildschirmbrillen. Die Erfindung ermöglicht somit eine Anpassung der Helligkeitsdynamik des beobachteten Bereichs auf die Helligkeitsdynamik des Anzeigemittels.

Bevorzugt nimmt das Ausgangssignal der Kamera degressiv mit der Beleuchtungsstärke zu, jedenfalls soweit es den verwendeten Arbeitsbereich der Kamera betrifft. Vorteilhafterweise wird eine Kamera mit einer logarithmischen Abhängigkeit des Ausgangssignals von der Beleuchtungsstärke, insbesondere eine Kamera mit einer proportionalen Abhängigkeit des Ausgangssignals zum Logarithmus der Beleuchtungsstärke, verwendet. Derartige Charakteristiken werden mit sog. HDRC-Kameras erreicht, also mit sog. "High Dynamic Range CMOS"-Kameras.

Die Erfindung schafft ein mobiles Beobachtungssystem für Szenen mit einer extremen Helligkeitsdynamik, ohne dass eine Blendung des Beobachters stattfindet. Hierzu sind die Anzeigemittel derart im Sichtbereich des Beobachters angebracht, dass eine Abblendung des Sichtbereichs stattfindet, insbesondere bei Auftreten extremer Helligkeiten.

Das erfindungsgemäße Verfahren sorgt ebenfalls für eine Verbesserung der Anzeige von Szenen mit extremer Helligkeitsdynamik, in dem das von der Kamera aufgenommene Bild in Bereiche aufgeteilt und die einzelnen Bereiche individuell einer Bildverarbeitung unterzogen werden. Beim Aufteilen werden Bereiche mit ähnlichen Helligkeitswerten gebildet, so dass innerhalb eines Bereichs nur ein niedriger Kontrast herrscht. In Abhängigkeit vom Absolutwert der Lichtstärke und der Leuchtdichtevariation wird ein Bereich so aufbereitet, dass der Kontrast innerhalb des Bereichs möglichst groß ist und zwar angepasst an die Helligkeitsdynamik der Anzeigemittel, insbesondere derart, dass der Kontrast innerhalb eines Bereichs dem von dem Anzeigemittel maximal darstellbaren Kontrast, bspw. von 256 darstellbaren Helligkeitsstufen, entspricht.

Bevorzugt erfolgt die Aufteilung des Bildes in Bereiche mit unterschiedlicher Lichtstärke mit Hilfe von nachfolgend näher erläuterter Kantenextraktion, Entopie, Schwellenwerten, bereichsorientierten Segmentierungsverfahren (z.B. Region Growing) und/oder Kompensation örtlich variierender Beleuchtungseinflüsse.

Dank der erfindungsgemäßen Maßnahmen werden Bildeinzelheiten in allen Bereichen mit unterschiedlichster Grundhelligkeit erkennbar. Das Sichtbarmachen aller in einem Bild enthaltenen Bereiche ist insbesondere in der Schweißtechnik und zwar insbesondere beim Metallschutzgas-, Autogen-, Elektro- bzw. Laserschweißen vorteilhaft. Die Erfindung kann jedoch auch in anderen Gebieten angewendet werden, nämlich bei Feuerwehren, insbesondere in Schutz- bzw. Atemmasken, in der Medizin, für Taucher, insbesondere in Gesichtsmasken, in Nachtsichtgeräten, insbesondere für Kraftfahrzeuge, in Infrarotkameras, sowie in der allgemeinen Forschung.

Weitere Einzelheiten und Besonderheiten der Erfindung werden nachfolgend anhand des in der Zeichnung dargestellten Ausführungsbeispiels näher erläutert. Es zeigt:

Fig. 1    eine am Körper anbringbare Vorrichtung zur Bildaufnahme und -anzeige mit einer Bildschirmbrille und einer Kamera;

Fig. 2    eine Kennlinie zur Veranschaulichung der Abhängigkeit der Ausgangsspannung einer Bildzelle einer HDRC-Kamera von der Beleuchtungsstärke und

Fig. 3    ein Blockschaltbild zur Veranschaulichung eines angepassten Kontrastverstärkungsverfahrens.

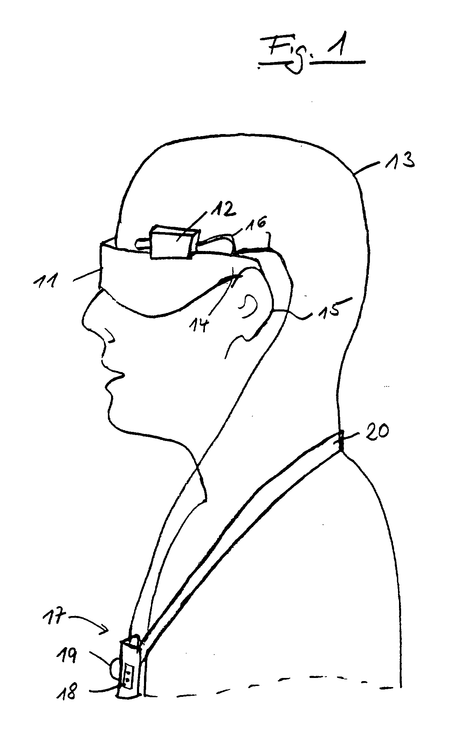

Fig. 1 zeigt eine tragbare Vorrichtung 10, nämlich ein Beobachtungssystem, mit einer Bildschirmbrille 11, an der eine HDRC-Kamera 12 angebracht ist. Eine weitere HDRC-Kamera befindet sich auf der anderen, nicht dargestellten Seite der Bildschirmbrille. Beide Kameras sind derart angeordnet, dass ein Stereobild einer zu beobachtenden Szene erfassbar ist. Die Kameras sind deshalb etwa im Abstand der Augen des Beobachters in Blickrichtung des Beobachters gerichtet.

Die Bildschirmbrille wird am Kopf 13 des Beobachters getragen. Im Ausführungsbeispiel ist die Brille mit je einem Bügel 14 für beide Ohren 15 versehen. Es sind jedoch auch andere am Kopf befestigbare Halterungen möglich, insbesondere Halterungen mit einem sich am Hinterkopf abstützenden Befestigungsriemen.

Die Bildschirmbrille 11 bedeckt das Gesichtsfeld des Beobachters vollständig, so dass der Beobachter bei aufgesetzter Bildschirmbrille 11 die Umgebung nicht direkt beobachten kann. Eine Beobachtung der Umgebung ist vielmehr nur über die HDRC-Kameras möglich. Diese liefern ihm je ein Bild für das linke und das rechte Auge, was auf der Innenseite der Bildschirmbrille erzeugt wird.

Die Bildschirmbrille 11 kann jedoch auch derart ausgestaltet sein, dass eine direkte Beobachtung der Szene durch die Brille hindurch möglich ist und eine Verdunkelung der Szene nur bei Überschreiten einer bestimmten Helligkeit durchgeführt wird. Eine derartige Verdunklung kann insbesondere auch mittels eines Helligkeitssensors automatisch oder aber auch manuell erfolgen.

Es sind jedoch auch größere als die in Fig. 1 dargestellte Bildschirmbrillen 11 vorgesehen, insbesondere derartige mit einer Gesichtsschutzvorrichtung, was insbesondere für die Verwendung in der Schweißtechnik oder bei der Brandbekämpfung vorteilhaft ist, um einen Schweißer vor Verletzungen durch aus dem Schweißbad herausfliegenden Schweißbadtropfen bzw. einen Feuerwehrmann vor Hitze zu schützen.

Die Kamera 12 ist über ein Kabel 16 mit der Brille 11 sowie einer Bedieneinheit 17 verbunden. Die Bedieneinheit 17 weist entweder selbst einen Bildverarbeitungsrechner auf oder bildet eine Schnittstelle zu einem entsprechenden, insbesondere tragbaren Rechner. Eine derartige Schnittstelle ist durch den Anschluss 18 dargestellt.

Die Bedieneinheit 17 weist auch eine Eingabeeinrichtung 19 auf, nämlich einen sog. Trackball mittels dessen Parameter für die Bildverarbeitung eingegeben werden können. Der Anschluss 18 dient jedoch auch zum Anschluss einer Tastatur oder anderer Eingabeeinrichtungen wie bspw. einer Maus.

Die Bedieneinheit 17 ist ebenfalls tragbar und mittels einer Halterung am Oberkörper oder Kopf 13 des Beobachters befestigbar. Diese Halterung weist beispielsweise einen umhängbaren Riemen 20 auf.

Ferner ist ein Anschluss für ein Triggersignal vorgesehen. Dieser Anschluss ist bspw. ebenfalls an der Bedieneinheit 17 oder an der angeschlossenen Rechnereinheit angeordnet. Mittels dieses Triggersignals ermöglicht das System eine auf einen elektrischen Schweißparameter, wie z.B. den Schweißstrom oder der Schweißspannung, getriggerte Beobachtung beliebiger Phasen des Werkstoffübergangs im Lichtbogen.

Aufgrund der nachfolgend beschriebenen Eigenschaften der HDRC-Kamera benötigt das System keine zusätzliche Beleuchtungseinheit, wodurch auch die an sich komplizierte Beobachtung eines Werkstoffübergangs in der Lichtbogenzone möglich ist.

HDRC-Kameras besitzen einen CMOS-Bildsensor, der eine Helligkeitsdynamik von im wesentlichen $10^6{:}1$ besitzt. Das Aufnahmeprinzip der HDRC-Kamera ist wie folgt: Die von der Kamera aufgenommenen und von einem Objekt reflektierten Lichtintensitätswerte, insbesondere Farb- bzw. Grauwerte, sind im wesentlichen von der Beleuchtungsstärke und den Reflektionseigenschaften des Objekts abhängig. Die Information eines Bildes hängt dagegen im wesentlichen von den Kontrasten ab. Eine HDRC-Kamera bildet im Gegensatz zu CCD-Kameras den durch unterschiedliche Reflektionen erzeugten Kontrast und nicht die Helligkeitsabsolutwerte ab. D.h., Helligkeitsverhältnisse werden als (konstante) Zahlendifferenzen unabhängig von der Beleuchtungsstärke wiedergegeben. Die resultierende hohe Intensitätsdynamik wird nach dem Vorbild des menschlichen Auges in jeder Zelle des Bildsensors vor der Weiterverarbeitung logarithmisch komprimiert. Durch die Komprimierung bleibt der Informationsgehalt der aufgenommenen Szene im Gegensatz zu linear arbeitenden CCD-Sensoren voll erhalten.

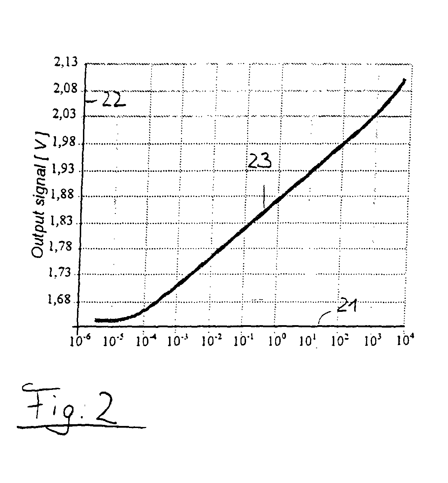

Fig. 2 zeigt den logarithmischen Arbeitsbereich einer HDRC-Bildzelle bei monochromatischer Bestrahlung mit Licht mit 633 nm Wellenlänge. An der Abszisse 21 ist die Bestrahlungsstärke in Watt pro Quadratmetern bzw. die Beleuchtungsstärke in Lux logarithmisch aufgetragen. An der Ordinate 22 ist die Ausgangsspannung einer HDRC-Bildzelle bzw. eines CMOS-Bildsensors in Volt linear aufgetragen. In einem Bereich von im wesentlichen $10^{-4}$-$10^3$ Lux besteht ein im wesentlichen logarithmischer Zusammenhang zwischen der Bestrahlungsstärke bzw. Beleuchtungsstärke und der Ausgangsspannung. In Fig. 2 folgt dies aufgrund des logarithmischen Auftrags der Bestrahlungs- bzw. Beleuchtungsstärke aus dem graden Verlauf der Kennlinie 23 innerhalb des genannten Bereichs. Dieser Bereich ist der wesentliche Arbeitsbereich einer HDRC-Bildzelle bzw. eines CMOS-Bildsensors.

Ein weiterer Vorteil von HDRC-Kameras ist, dass zu jedem Zeitpunkt auf jede Bildzelle unabhängig von allen anderen Zellen einzeln zugegriffen werden kann. Der von CCD-Kameras bedingte Zwang zur Abarbeitung eines Full-Frame-Videospeichers entfällt. Möglich wird dies durch das Grundprinzip des CMOS-Bildsensors: Eine Bildzelle basiert bei diesem Sensor auf einer fotoempfindlichen, mit einem Widerstand in Serie geschalteten Diode. Dadurch liegt eine kontinuierliche Wandlung des Fotonenstroms in einer Ausgangsspannung vor. Durch diese Eigenschaft können statt des gesamten Bildes kleine Bildausschnitte ausgelesen werden, was wesentlich höhere Bilderfassungsfrequenzen ermöglicht. Beispielsweise kann eine Ausleserate von 16,6 Mio. Pixel bzw. 120 Vollbildern - bei einer Größe von 512 x 256 Pixel - pro Sekunde erzielt werden. Bei einer Bildgröße von 32 x 32 Pixel bedeutet dies eine mögliche Ausleserate von 16.000 Bildern pro Sekunde. Durch entsprechend auf eine Szene, beispielsweise einen Schweißprozess eingestellte Ausleseroutinen, lässt sich so für den wesentlichen Bildbereich eine Hochgeschwindigkeitskamera simulieren.

Vorteilhaft nutzt das System bei der Onlinebeobachtung den Umstand, dass beim Schweißen, insbesondere Metallschutzgas-Schweißen, mit Impulslichtbogen der Werkstoffübergang periodisch ist. Für die Beobachtung eines solchen Prozesses ist es regelmäßig ausreichend, ein Bild pro Periode aufzunehmen. Die Bildaufnahme wird mittels einer Echtzeitmessvorrichtung nach Erreichen eines Triggerkriterium, dessen Flanke und Wert einstellbar sind, und nach einer einstellbaren Verzögerungszeit ausgelöst. Durch das getriggerte, periodische Aufnahmeverfahren entsteht das virtuelle Bild eines quasi-stationären Vorgangs, d.h. eines stillstehenden Tropfens. Unregelmäßigkeiten innerhalb des Schweißprozesses fallen sofort als abweichende Bilder auf. Auswirkungen geänderter oder sich ändernder Schweißparameter auf den Prozess können direkt, d.h. prozessbegleitend sichtbar gemacht werden. Aufgrund des variablen Triggerkriteriums und der variablen Verzögerungszeit kann jede Prozessphase des Schweißprozesses, insbesondere die Ablösung, der Flug und der Übergang des Tropfens in das Schweißbad, gezielt online beobachtet und aufgenommen werden. Dies gilt auch dann, wenn die interessierende Prozessphase selbst kein eindeutiges Triggerkriterium besitzt.

Zwar ist die Triggerung insbesondere beim Schweißen besonders vorteilhaft. Sie kann jedoch auch bei anderen periodischen Vorgängen sinnvoll eingesetzt werden. Insbesondere kann als Triggersignal auch ein akustisches Signal verwendet werden.

Die Bildschirmbrille 11 kann jedoch neben dem Bild der beobachteten Szene auch weitere Informationen, insbesondere Parameter, einblenden, insbesondere auch Angaben von Schweißparametern oder Einstellungen - Einstellparameter - der Bildverarbeitung. Insbesondere können (fremd)ermittelte Segmentierungsgrenzen bzw. Konturen des angezeigten Bilds eingeblendet werden, wie beispielsweise aus der Bildverarbeitung gewonnene Segmentierungsgrenzen bzw. aus bei einer Aufnahme mit anderer Beleuchtung gewonnene und/oder aus Konstruktionsplänen ermittelte Bilder bzw. Konturen.

Wenn bei der Beobachtung besonders günstige Parameter, insbesondere Bildverarbeitunsparameter, aufgefunden wurden, können diese abgespeichert werden und automatisch oder manuell bei gleicher oder ähnlicher Beleuchtung bzw. Leuchtdichtevariation des aufgenommenen Bildes wiederverwendet werden. Hierbei können die Benutzereinstellungen im Laufe der Zeit bzw. mehrerer Beobachtungssequenzen insbesondere mittels künstlicher neuronaler Netze erfasst werden.

Zu den genannten Parametern zählen insbesondere Parameter zur Definition von Bereichen für eine Bildaufteilung, Parameter zum Ausblenden von Bildbereichen, zur Kontrasteinstellung und/oder zum Einstellen elektrisch einstellbarer Filter. Derartige, elektrisch einstellbare Filter dienen insbesondere zum Filtern auswählbarer Spektralbereiche und/oder Polarisierungen des empfangenen Lichts.

Das erläuterte besondere System bedient sich aber auch einer besonderen Bildverarbeitung, deren wesentliche Bereiche eine Vorverarbeitung und eine Segmentierung des Bildes sind. Ferner wird bevorzugt auch eine Merkmalsextraktion und Klassifikation erkannter Objekte durchgeführt.

Beim Schweißen kommt der Vorverarbeitung aufgrund der geringen Grauwertübergänge zwischen Tropfen und Lichtbogen eine besondere Bedeutung zu. Hierbei wird das Verfahren "Contrast Enhancement Using the Laplacian-of-a-Gaussian Filter" (LoG). Zusätzlich wird eine Hintergrundkompensation durchgeführt. Die Segmentierung wird bereichsorientiert mit einer Grauwertschwelle durchgeführt. Die Merkmalsextraktion verwendet den "Run Length Code". Mit Hilfe des sogenannten Maximum-Likelihood Klassifikators werden die berechneten Merkmale mit ermittelten charakteristischen Merkmalen verglichen und so die Objekte vorgegebenen Objektklassen wie bspw. "Tropfen", "Spritzer" oder "unbekannt", zugeordnet.

Ziel der Vorverarbeitung ist es, die empfangenen Bilder so zu verbessern, dass eine bereichsorientierte Segmentierung mit einem Grauwert durchführbar ist. Problematisch dabei ist, dass die HDRC-Kamerabilder, insbesondere von Werkstoffübergängen beim Schweißen, hervorgerufen durch die Eigenschaften der Kamera nur geringe und zusätzlich stark variierende Grauwertabstufungen zwischen den einzelnen Bildobjekten aufweisen. Dadurch sind sie aufgrund des daraus resultierenden geringen Kontrastes keiner direkten automatischen visuellen Analyse mit Standardverfahren zugänglich. Die Vorverarbeitung der HDRC-Kamerabilder ist als gegenüber variierenden Bildinhalten, z.B. Helligkeit des Lichtbogens, robustes Verfahren ausgebildet. Bspw. unterscheiden sich Bildobjekte innerhalb des Lichtbogens nur durch wenige Graustufen vom Hintergrund, nämlich vom Lichtbogen. In diesen Bildbereichen ist eine Kontrastverstärkung erforderlich. In anderen Bildbereichen dagegen ist der Kontrast zwischen Objekt und Hintergrund ausreichend groß. Eine Kontrastverstärkung in diesen Bildbereichen, kann bspw. durch Überschreitung des Wertebereichs der Grauwertbilder, zu einer Verschlechterung der Bildqualität und somit zu einer fehlerhaften Segmentierung und Klassifikation führen. Zudem werden durch eine konventionelle Kontrastverstärkung, wie sie z.B. mit einem Hochpassfilter möglich ist, Bildstörungen hervorgehoben. Für die Vorverarbeitung wird daher ein adaptives Verfahren verwendet, das die Erkennung der zu erhaltenden kontrastreichen und zu verbessernden kontrastarmen Bildbereiche ermöglicht und im Gegensatz zu konventionellen Verfahren keine Hervorhebung von Bildstörungen verursacht.

Zunächst erfolgt eine angepasste Kontrastverstärkung unter Zugrundelegung des o.g. "Contrast Enhancement Using the LoG-Filter". Bei diesem Verfahren ergibt sich die Kontrastverstärkung aus der Differenz eines Bildes in dem Vielfachen seines LoG gefilterten Bildes. Weil das LoG-Filter sowohl das Bild glättet, als auch die Kanten hervorhebt, ermöglicht es sowohl eine Rauschunterdrückung als auch eine Kontrastaufbesserung. Das Verfahren gliedert sich in folgende Schritte:

Zunächst erfolgt die Berechnung des LoG-Filters mit der Standardabweichung $\sigma$ mittels der Gleichuno:

$$LoG(x, y) = -\frac{1}{\pi\sigma^4}\left(1 - \frac{x^2 + y^2}{2\sigma^2}\right)e^{-\frac{x^2 + y^2}{2\sigma^2}}$$

Im nächsten Schritt erfolgt die Berechnung des Bildes $g'(x,y)$, das aus der Faltung des Originalbildes $f(x,y)$ mit dem Filter $LoG(x,y)$ resultiert, und zwar in Form der Gleichung:

$$g'(x, y) = f(x, y) * LoG(x, y)$$

Anschließend erfolgt eine Multiplikation von $g'(x,y)$ mit dem Faktor $\beta \geq 1$, also die Berechnung von $\beta \cdot g'(x,y)$. Schließlich erfolgt eine Subtraktion von $\beta \cdot g'(x,y)$ vom Originalbild $f(x,y)$ gemäß der Gleichung:

$$g(x,y) = f(x,y) - \beta \cdot f(x,y) * LoG(x,y)$$

Mittels dieser Schritte wird ein Hell-Dunkelübergang derart verstärkt, dass im Bereich des Übergangs die hellen Grauwerte in Richtung höherer Helligkeitswerte und die dunklen Grauwerte in Richtung dunklerer Grauwerte verschoben werden. Der Grad der Kontrastverstärkung wird durch den Faktor $\beta$ bestimmt. Je größer $\beta$ gewählt wird, desto größer ist der Kontrast des Ergebnisbildes.

Zur Realisierung einer adaptiven Kontrastverstärkung wird das Verfahren modifiziert, in dem der Kontrast $\beta$ an den Bildinhalt angepasst wird. Zur Erzeugung einer Richtungsfunktion für $\beta$ wird auf das Originalbild der sog. Sobel-Operator angewendet und auf das entstandene Gradientenbild eine Tiefpassfilterung durchgeführt. Die Anwendung des Sobel-Operators bestimmt die Qualität der Bildbereiche. Die Tiefpassfilterung schafft einen kontinuierlichen Übergang zwischen den Bildbereichen. In konstrastreichen Bildbereichen, in denen große Intensitätsunterschiede zwischen den Bildobjekten und ihrer Umgebung bestehen, detektiert der Kantenoperator stark ausgeprägte Grauwertkanten, was hohen Werten im tiefpassgefilderten Gradientenbild entspricht. In diesen Bereichen muss $\beta$ kleine Werte annehmen, um den Kontrast zu erhalten. In kontrastarmen Bildbereichen nimmt das tiefpassgefilterte Gradientenbild niedrige Werte an, da die Intensitätsunterschiede zwischen den Bildobjekten und ihrer Umgebung gering sind. Hier muss $\beta$ hohe Werte annehmen, um den Kontrast zu verstärken. Ein geeigneter Wert für $\beta$ wird gebildet aus der Gleichung:

$$\beta = 200 - 40 \cdot ln\left[f_{Sob,TP}(x, y)\right]$$

wobei die Konstanten "200" und "40" auch andere, jedoch ähnliche Werte annehmen können.

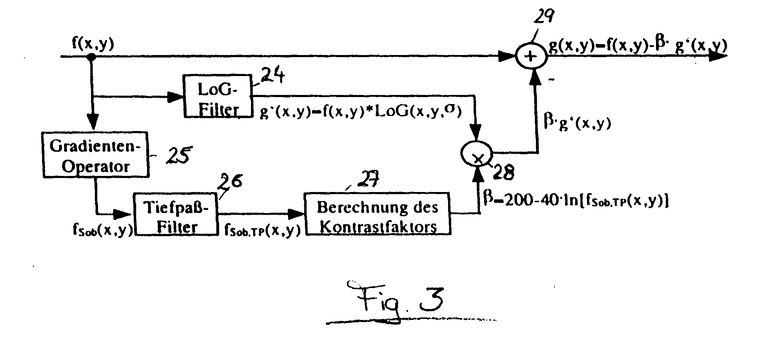

Die erläuterten Verfahrensschritte sind in Fig. 3 als Blockdiagramm dargestellt. Fig. 3 zeigt zunächst die Berechnung der Koeffizienten des LoG-Operators in LoG-Filter-Block 24. Ferner wird im LoG-Filter-Block 24 die Faltung des Originalbildes $f(x,y)$ mit dem LoG-Filter vorgenommen. In einem Gradienten-Operatorblock 25 wird der Sobel-Operator auf das Originalbild $f(x,y)$ angewendet. Das Ergebnis ist das Gradientenbild $f_{Sob}(x,y)$. In einem Tiefpass-Filter-Block 26 wird durch Tiefpassfilterung die Richtungsfunktion $f_{Sob,TP}(x,y)$ für den Kontrastfaktor β bestimmt. In einem Berechnungsblock 27 wird der gewichtete Kontrastfaktor β berechnet, der anschließend durch einen Multiplizierer 28 mit dem Ergebnisbild $g'(x,y)$ des LoG-Filters 24 pixelweise multipliziert wird. Dieses Produkt wird mittels des Addierers 29 vom Originalbild $f(x,y)$ subtrahiert.

Ferner erfolgt eine Kompensation örtlich variierender Beleuchtungseinflüsse: Beim Schweißen verursacht der Lichtbogen eine örtlich variierende Ausleuchtung der Bildszene. Zusätzlich entstehen auf einem Tropfen Reflektionen. Eine Segmentierung mit einer festen Grauwertschwelle ist ohne die Kompensation der örtlich variierenden Beleuchtungseinflüsse nicht möglich. Da es sich bei einer HDRC-Kamera um ein Bildaufnahmesystem mit logarithmischer Kennlinie handelt, wird eine Korrektur von additiven Inhomogenitäten vorgenommen. Dazu wird ein Referenzbild, in dem nur die Beleuchtungskomponente enthalten ist, vom Ergebnisbild der Kontrastverstärkung subtrahiert, so dass im Ergebnisbild der Hintergrundkompensation nur die Kontraste mit den interessierenden Bildinformationen enthalten sind. Das Referenzbild wird durch Tiefpassfilterung des Originalbildes erzeugt. Durch die Tiefpassfilterung werden feine Bilddetails unterdrückt, wodurch das Referenzbild nur noch die hellen und dunklen Bereiche enthält.

Anschließend erfolgt eine bereichsorientierte Segmentierung mit einer insbesondere nicht-konstanten also variablen Grauwertschwelle. Diese Grauwertschwelle wird automatisch ermittelt. Bedingt durch die Hintergrundkompensation weisen alle Bilder nach der Vorverarbeitung etwa die gleiche unimodale Histogrammverteilung auf. Die Schwelle muss demnach an der Flanke des Histogramms gesetzt werden.

Ein Verfahren für die automatische Berechnung einer optimalen Grauwertschwelle für unimodale Histogramme ist das sog. Anisotropie-Koeffizienten-Verfahren. Dieses Verfahren berücksichtigt die geometrische Form des Histogramms und ist besonders geeignet für Bilder, in denen die relevante Information in den Konturen enthalten ist.

Die Bildsegmentierung kann bevorzugt durch den Einsatz von Fussy-Sets unterstützt werden. Zur lernenden Bildsegmentierung eignet sich besonders der Einsatz von Neuro-Fussy-Systemen.

Nach der Segmentierung erfolgt die Merkmalsextraktion zur Detektion von Bildobjekten. Für die Detektion und Berechnung der Objektmerkmale wird die sog. Lauflängencodierung bzw. Run Length Code verwendet, wobei die geometrischen Merkmale Objektfläche, -umfang, -breite und/oder -höhe berechnet werden. Für die Merkmalsextraktion und Klassifikation der Bildobjekte ist ein Bildmaßstab erforderlich. Hierzu kann ein Referenzobjekt zur automatischen Maßstabsbestimmung, wie bspw. eine Schweißelektrode, insbesondere deren Durchmesser verwendet werden.

Die Klassifikation zielt darauf ab, bestimmte Objekte als solche zu erkennen, bspw. dass sowohl ein Tropfen als auch eventuell auftretende Spritzer als solche erkannt werden. Zusätzlich sind in den segmentierten Bildern unbekannte Objekte enthalten, wie bspw. die Schweißelektrode oder durch Störung hervorgerufene Fragmente. Die Klassifikation dient dazu, aus der Menge aller im Bild enthaltenen Objekte die bekannten Objekte, bspw. Tropfen und Spritzer zu identifizieren.

Die Klassifikation erfolgt mit einem fest dimensionierten und/oder lernenden überwachten Maximum-Likelihood-Klassifikator. Hierbei werden die Objektklassen im Merkmalsraum durch Verteilungsfunktionen beschrieben, die aus Stichproben ermittelt werden. Die Zuweisung eines Bildobjekts zu einer Objektklasse erfolgt nach dem Kriterium der maximalen Wahrscheinlichkeit.

Durch die Bildvorverarbeitung, Segmentierung und Merkmalsextraktion erfolgt die Erkennung und geometrische Vermessung der im Bild enthaltenen Objekte. Die Klassifikation vergleicht die berechneten Merkmale mit den für den Anwendungsfall charakteristischen Merkmalen und ordnet so die Objekte den vorgegebenen Objektklassen zu. Durch die Zuordnung kann eine Analyse von HDRC-Bildern des Werkstoffübergangs bei Metallschutzgas-Schweißprozessen durchgeführt werden. Ohne die Schritte Merkmalsextraktion und Klassifikation eignet sich das beschriebene Verfahren auch für die Darstellung von Szenen mit extremer Helligkeitsdynamik, so dass in allen Bereichen Einzelheiten für den Beobachter sichtbar werden. Eine weitere Besonderheit besteht darin, das Bild während der Verarbeitung mit Falschfarben zu unterlegen, so dass die in einem Bild vorhandene Informationsdichte weiter erhöht wird. Ferner können einzelne Bildbereiche, die keine wesentliche Information tragen, ausgeblendet werden.

**Bezugszeichenliste:**

10  tragbare Vorrichtung
11  Bildschirmbrille
12  HDRC-Kamera
13  Kopf
14  Bügel
15  0hr
16  Kabel

17 Bedieneinheit
18 Anschluss
19 Eingabeeinrichtung
20 Riemen
21 Abszisse
22 Ordinate
23 Kennlinie
24 LoG-Filter-Block
25 Gradienten-Operator-Block
26 Tiefpass-Filter-Block
27 Berechnungsblock
28 Multiplizierer
29 Addierer

**Patentansprüche**

1. Vorrichtung zur Bildaufnahme und -anzeige mit wenigstens einer Kamera (12) zur Aufnahme eines Bildes und Anzeigemitteln (11) zum Anzeigen des Bildes, wobei Kamera (12) und Anzeigemittel (11) an einer am Kopf (13) und/oder Oberkörper einer Person anbringbaren Halterung (14) angeordnet sind, **dadurch gekennzeichnet, dass** die Kamera (12) eine nicht-lineare Abhängigkeit eines von ihr erzeugbaren elektrischen Ausgangssignals (22) von einer von der Kamera empfangbaren Beleuchtungsstärke (21) aufweist.

2. Vorrichtung nach Anspruch 1, **dadurch gekennzeichnet, dass** das Ausgangssignal (22) im Arbeitsbereich degressiv mit der Beleuchtungsstärke (21) zunimmt.

3. Vorrichtung nach Anspruch 1 oder 2, **gekennzeichnet durch** eine im Arbeitsbereich logarithmische Abhängigkeit des Ausgangssignals (22) von der Beleuchtungsstärke (21), insbesondere eine Proportionalität des Ausgangssignals (22) zum Logarithmus der Beleuchtungsstärke (21).

4. Vorrichtung nach einem der vorhergehenden Ansprüche, **gekennzeichnet durch** einen Triggereingang (18) zum Empfang eines die Bildaufnahme triggernden externen Triggersignals.

5. Vorrichtung nach einem der vorhergehenden Ansprüche, **gekennzeichnet durch** wenigstens ein elektrisch einstellbares Filter zum Filtern von auswählbaren Spektralbereichen und/oder Polarisierungen des empfangbaren Lichts.

6. Vorrichtung nach einem der vorhergehenden Ansprüche, **gekennzeichnet durch** eine Eingabeeinheit (19) zur Eingabe von Parametern, insbesondere zur Definition von Bereichen für eine Bildaufteilung, zum Ausblenden von Bildbereichen, zur Kontrasteinstellung und/oder zum Einstellen des elektrisch einstellbaren Filters.

7. Verfahren zum Aufnehmen und Anzeigen von Bildern auf Anzeigemitteln (11), insbesondere mit einer Vorrichtung nach einem der Ansprüche 1 bis 6, wobei ein aufgenommenes Bild vor dem Anzeigen elektronisch bearbeitet wird, **dadurch gekennzeichnet, dass** das aufgenommene Bild in Bereiche aufgeteilt und innerhalb der einzelnen Bereiche der jeweilige Helligkeitskontrast individuell an die Helligkeitsdynamik der Anzeigemittel (11) angepasst, insbesondere erhöht wird, insbesondere derart, dass der jeweilige Kontrast der Helligkeitsdynamik entspricht.

8. Verfahren nach Anspruch 7, **dadurch gekennzeichnet, dass** vor dem Aufteilen das aufgenommene Bild derart vorverarbeitet wird, dass eine an das aufgenommene Bild angepasste Kontrastverstärkung von Konturen des Bildes zum Auffinden der Bereiche, insbesondere mit Kompensation örtlich variierender Beleuchtungseinflüsse, durchgeführt wird.

9. Verfahren nach Anspruch 7 oder 8, **dadurch gekennzeichnet, dass** vormals verwendete Benutzereinstellungen bei gleicher oder ähnlicher Leuchtdichtevariation des aufgenommenen Bildes automatisch wiederverwendet werden, wobei die Benutzereinstellungen insbesondere mittels künstlicher neuronaler Netze erfasst werden.

10. Verfahren nach einem der Ansprüche 7 bis 9, **dadurch gekennzeichnet, dass** die Aufnahme eines Bildes von einem externen Signal, insbesondere von einem Schweißvorgang erzeugten elektrischen oder akustischen Signal, getriggert wird.

**11.** Verfahren nach einem der Ansprüche 7 bis 10, **dadurch gekennzeichnet, dass** zusätzlich zum angezeigten Bild interne und/oder externe Signale eingeblendet werden.

**12.** Verfahren nach einem der Ansprüche 7 bis 11, **dadurch gekennzeichnet, dass** bei der Bildverarbeitung aus einer Aufnahme bei anderer Beleuchtung und/oder aus Konstruktionsplänen ermittelte Segmentierungsgrenzen bzw. Konturen in das angezeigte Bild eingeblendet werden, wobei gegebenenfalls das verarbeitete Bild mit Falschfarben angezeigt wird und/oder gegebenenfalls einzelne Bereiche ausgeblendet werden.

Fig. 1

Fig. 2

$f(x,y)$

LoG-Filter — 24
$g\cdot(x,y)=f(x,y)*LoG(x,y,\sigma)$

Gradienten-Operator — 25

$g(x,y)=f(x,y)-\beta\cdot g\cdot(x,y)$

$\beta\cdot g\cdot(x,y)$

Tiefpaß-Filter — 26

$f_{Sob}(x,y)$    $f_{Sob,TP}(x,y)$

Berechnung des Kontrastfaktors — 27

$\beta=200-40\cdot\ln[f_{Sob,TP}(x,y)]$

28

29

Fig. 3

EP 1 148 718 A2